# EUROPEAN PATENT SPECIFICATION

(11) **EP 0 655 965 B1**
(45) Date of publication and mention of the grant of the patent: **20.08.1997**
(21) Application number: 92918306.9
(22) Date of filing: 24.09.1992
(51) Int. Cl.: B28B 11/00

(54) **PROCESS FOR THE DRYING OF PERFORATED BRICK BLOCKS AND PLANTS FOR CARRYING OUT THE PROCESS**
Verfahren zum Trocknen von perforierten Ziegelsteinen und Vorrichtung zum Durchführen des Verfahrens.
PROCEDE DE SECHAGE DE BRIQUES ET INSTALLATIONS POUR EFFECTUER LE PROCEDE

(30) Priority: 12.08.1992 CH 2520/92
(43) Date of publication of application: 07.06.1995
(73) Proprietor: BRIDGELANE LTD, Dublin 2 (IE)
(72) Inventor: LANDMAN, Martin, London NW11 7LB (GB)
(74) Representative: Fiammenghi, Carlo
(86) International application number: EP9202023
(87) International publication number: WO9404329

(56) References cited:
- DE-A- 3 147 582
- DE-A- 4 010 850
- DE-C- 858 655
- DE-C- 3 545 498
- GB-A- 2 085 425
- US-A- 2 170 936

## Description

The invention relates to the field of drying perforated brick blocks inside drying tunnels into which air pre-heated to a pre-determined temperature is blown.

The main drawbacks exhibited by drying plants that use processes already known are twofold: the high energy consumption required by the process and the risk of deformations or cracks present on the finished product.

Both these drawbacks are caused by the modalities of the process that is carried out, as well as by the morphology of the plants itself.

Presently, in fact, the drying of perforated brick blocks takes place through a process that involves the stacking of individual layers of blocks on levels of special metal shelving inside a tunnel or, more commonly, a room of significant size in which two heating and ventilating units, either stationary or mobile, operate and direct streams of air onto the blocks to obtain their drying.

No matter how accurate the study of the reciprocal arrangement of the shelves and fans may be, still the drawback is observed that the brick blocks that are located in different positions undergo drying processes whose temperature and humidity parameters, in the course of the operation, end up being significantly different from one another, with the resulting differentiation in the quality of the blocks themselves.

In fact, since the drying essentially takes place through the dynamic action of the airflows pushed by the fans onto the shelving and the blocks, naturally phenomena of turbulence and choking of the stream on areas "in shadow" are observed that can cause uneven contractions in different blocks, or even of different faces of the same block, and very often surface cracks and aberrations in the planarity of the outer surfaces of the blocks.

These phenomena are also due to the fact that in the course of the process described, the drying essentially takes place starting from the outer surfaces of the blocks and proceeding toward the inside; moreover, as already explained, with uneven temperature and humidity gradients in the various parts of the same block. Thus this effects the quality of the final product; as to energy consumption, on the other hand, supposing a yield coefficient is established to indicate the relationship with the quantity (mass) of product dried and the quantity of thermal and electric energy employed in the process that have been used up to now, very low values are obtained that are due to the following concomitant factors:
- a high quantity of mechanical energy is required to move the huge volume of air that has to pass through the shelving on which the blocks are placed, with significant energy losses;
- the drying process has a relatively high duration, especially for pieces with significant thickness; this duration must be extended until the blocks in the least favored positions are completely dried;
- since it proceeds, as mentioned, from the outside of the block to the inside, the duration of the process requires in itself long stretches of time, with the resulting increase in energy losses per unit produced caused by losses of air to the outside or by thermal exchanges with the outside, etc.;
- an appreciable quantity of energy is used for the heating of the shelves, and then it is lost in the act of removing the hot shelves themselves from the drying chamber;
- for a medium value of productive capacity of the plant, a large-volume drying chamber is required, resulting in increased surfaces for heat exchanges with the outside and related losses.

The inventor of the invention according to the present patent application has sought to work out a solution that makes it possible to eliminate all the drawbacks listed above. The solution consists in a process that provides for carrying out the drying of the blocks from the inside, corresponding to their perforations, and proceeding toward the outside, without affecting their outer surfaces. Patent DE-A-31 47582 describes a process that shows a somehow similar result, but the process itself and the plant adapt to realize it considerably differ from those according to the present invention, which allow a more accurate and quicker way of producing perforated brick blocks.

More precisely, the object of the invention is a process for the drying of perforated brick blocks through the action of air pre-heated to a pre-determined temperature that is blown into a drying tunnel in which the blocks are placed, the drying being obtained by causing the above mentioned air to flow only through the perforations of the blocks without substantially affecting the outside lateral surfaces of the blocks themselves, which are stacked on one another and laid down sideways beside one another, characterized by the characterizing portion of appended claim 1.

The above process, as well as some preferred embodiments of plants for its execution will be described here referring to the attached drawings which represent:
- in figure 1, the view of the longitudinal section of a block while it is being dried with the process according to the invention;
- in figure 2, the side view of a mobile trolley on which blocks to be dried are stacked;
- in figure 3, an illustrative detailed view of how the perforations of the blocks in figure 1 are aligned in the stacked blocks;
- in figure 4, the overhead view of the trolley in figure 1;
- in figure 5, the front view;
- in figure 6, the side view of a drying plant for carrying out the process according to the invention;
- in figure 7, its middle longitudinal section;
- in figure 8, the overhead view of the same plant sectioned with a horizontal plane parallel to its floor;
- in figure 9, the transverse section of the plant done near the entrance of the tunnel;
- in figure 10, its transverse section along A-A in one of its intermediate points;
- in figure 11, its transverse section corresponding to the main heating units and the auxiliary cooling units, near the exit of the tunnel;
- in figure 12, the transverse section of an intermediate point of a multiple plant consisting of two tunnels with a double line of trolley, placed alongside one another without a dividing wall.

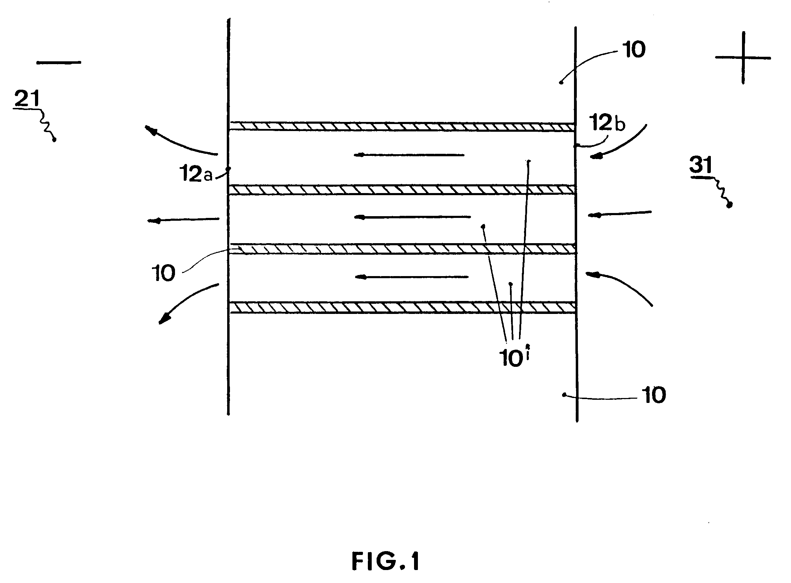

The concept which is at the basic of the invention is that of carrying out the drying of each block not through a more or less turbulent ventilation of its outer surfaces, but rather (see figure 1) by the almost laminar running of flows of heated air through lightening perforations 10ⁱ of brick blocks 10; this flow is brought about by causing and maintaining a pre-determined difference in pressure between the two ends 12a and 12b of said perforations 10ⁱ. By operating suitably on the means (usually fans) that generate this difference in pressure in order to vary their value, it is possible to vary the velocity of the flow so as to obtain, by a determined temperature of the drying air that can also be adjusted, the desired movement of the drying curve referred to time.

With the prevalent values found experimentally to be the most suitable for the efficiency of the plant as a whole, and for percentage areas of the perforations comprised between the mean values, it was observed how it would be possible to proceed to dry a row of blocks laid lengthwise and arranged with the perforations of one over those of the other, with the row being up to about 120 cm long.

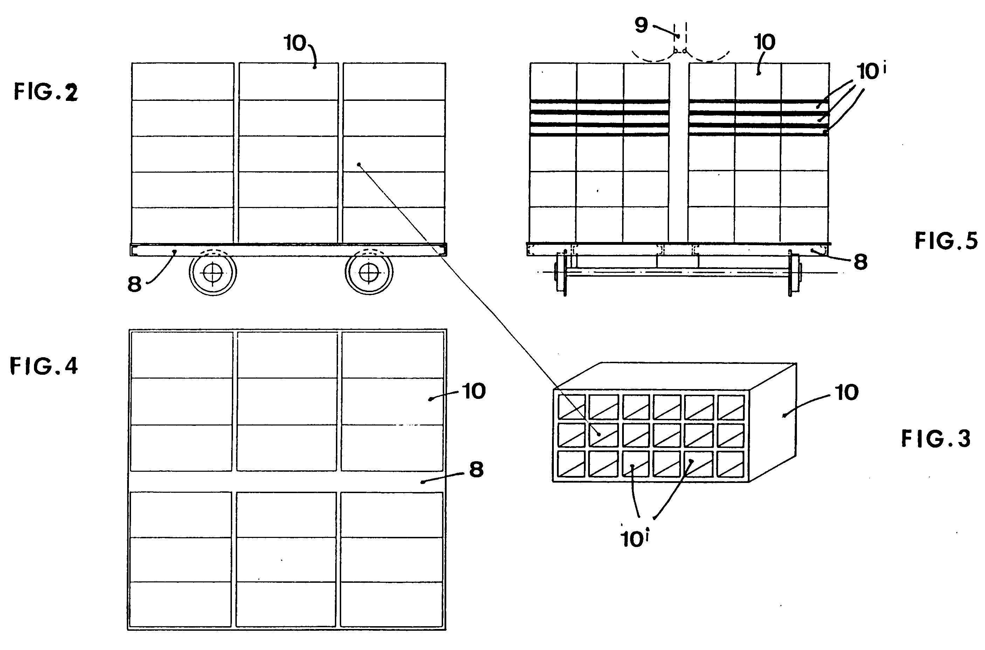

Blocks 10 themselves can be laid sideways and stacked directly on one another (see figures 2 to 5) up to a height which, with the types of blocks and materials used today, varies roughly between 95 and 110 cm.

It has also been found experimentally that the drying takes place relatively more quickly near the end of the perforation that functions as the entrance for the circulating air, but that this does not involve any drawback for the dimensional stability of the block during the drying process as a whole.

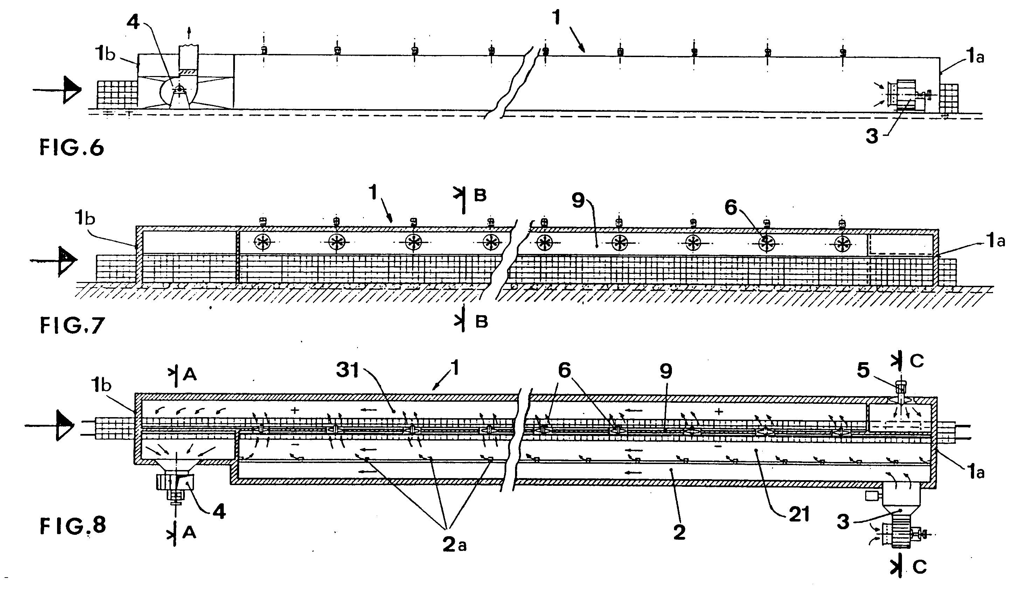

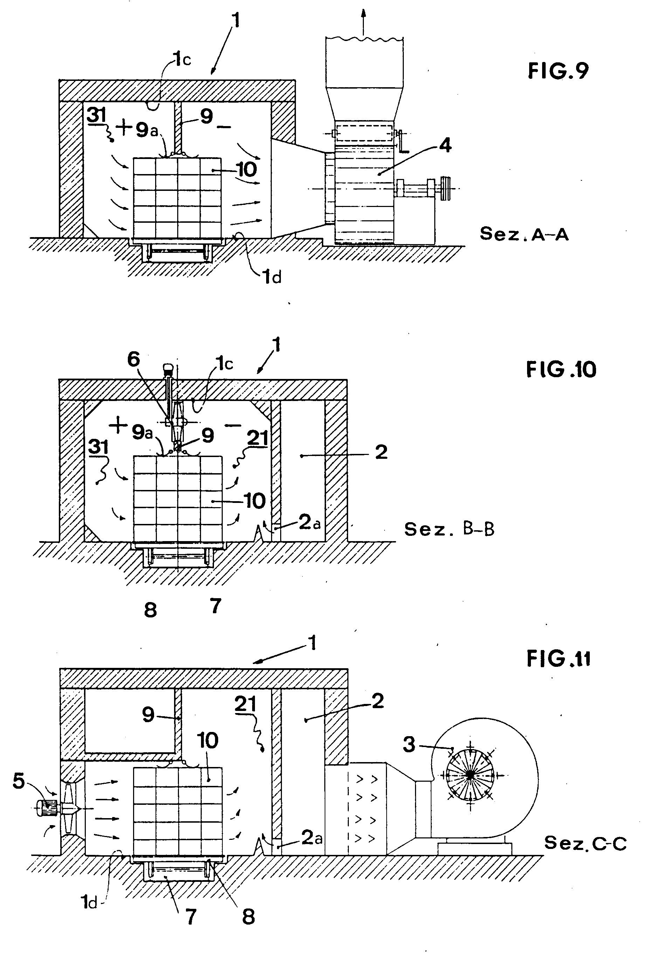

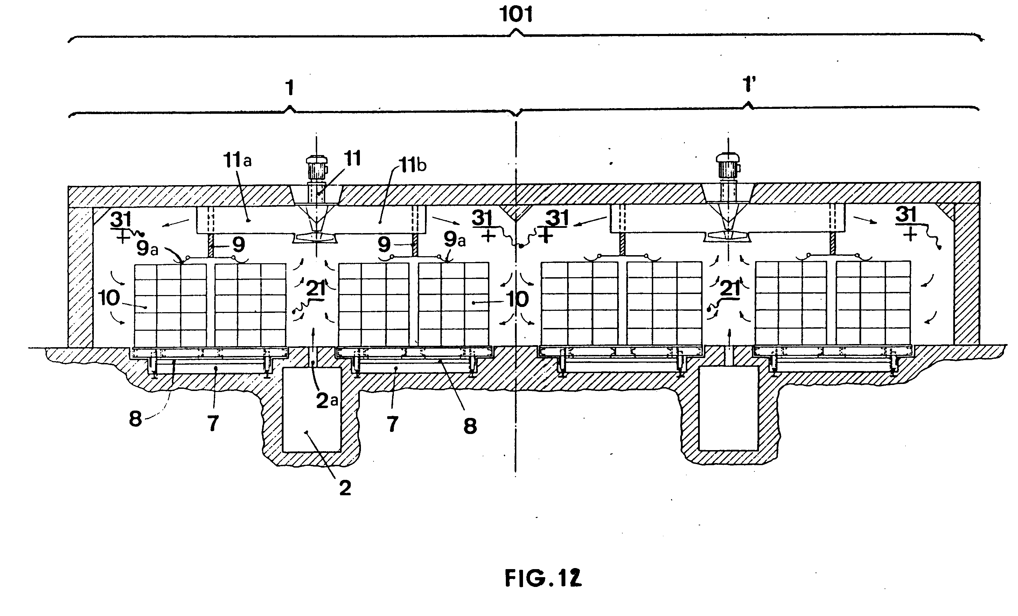

With reference to figures 6 to 11, we now proceed to the description of a preferred embodiment of a plant suitable for carrying out the process described above, including a single drying tunnel 1.

Such a plant, as already mentioned, is composed essentially of drying tunnel 1 with longitudinal development, on whose floor 1d is drawn and embedded guide path 7 designed to hold and guide during their conveyance mobile trolleys 8 that are used for the transport of blocks 10 during drying.

It is evident that a rail track fixed onto the above path (not represented), to better guide the wheels of trolleys 8.

These trolleys 8, connected to one another mechanically, are brought in on guide path 7, and on them are stacked, in direct contact with one another, several layers of blocks 10, with the blocks laid sideways and lengthwise, as already mentioned, so that the perforations of each block are aligned with the perforations matching those of the block that is adjacent lengthwise, thus forming a conduit for the passage of the drying air (see figure 5) from one side 21 of tunnel 1 to the other 31.

Indeed, tunnel 1 itself, thanks to vertical diaphragm 9 that is mounted on the center line of ceiling 1c, and that rests on brick blocks 10 below by means of suitable members 9a that exert a pre-determined seal on blocks 10, is separated from diaphragm 9 and from the row of trolleys 8 in two sides 21, 31 separated from stacked blocks 10, and communicating with one another only through all the perforations 10ⁱ of the blocks themselves, these blocks being arranged perpendicular to the direction of the movement of trolleys 8, as marked by a larger arrow in figures 6, 7 and 8.

The plant also includes conduit 2, parallel and adjacent over its entire length to tunnel 1 itself, equipped with a number of perforations 2a and of adjustable small openings placed at equal distances which put conduit 2 in communication with 31 of the two sides 21, 31 into which, as was mentioned, the tunnel is subdivided.

Inside this conduit 2, the drying air that is heated to pre-determined pressures and temperatures is delivered by main ventilation and heating unit 3, generally consisting of a fan and a device for heating the area (for example, a heat exchanger, a burner or similar means), placed near the exit of the tunnel.

This air which, as mentioned, is introduced from small openings 2a into side 31 of tunnel 1, enters into the field of action of a series of circulation fans 6 that, like diaphragm 9, are also mounted on the center line of ceiling 1c of tunnel 1, and that cause the air to circulate by the effect of determined pressure difference, between the two sides 21 and 31 of tunnel 1 (the direction of the various airflows is indicated on the drawings by the smaller arrows).

All the air, circulating cyclically and propelled by fans 6, between the two sides of the tunnel, is made to move with a pre-determined conveyance velocity toward entrance 1b of the tunnel and is evacuated, once it has yielded its heat and absorbed the humidity of the blocks, by means of suction fan 4 which serves as an evacuation unit, placed precisely at entrance 1b of tunnel 1.

Once they have reached the vicinity of exit 1a of tunnel 1, the blocks are then subjected to a stream of cooling air generated by cooling unit 5, placed on the opposite side from main unit 3, and including a compressing fan, which is sized and aligned so that the stream of air, after being heated by cooling the dried blocks to a large extent, is conveyed into side 31 of the tunnel, mixing with the drying air generated by the main ventilation and heating unit 3 itself. By operating in this way a good part of the heat from the cooling of blocks 10 is recovered, adding a further factor of energy saving. Of course, both entrance 1b and exit 1a of the tunnel must be designed so as to allow for the passage of mobile trolleys 8 without significant losses of air to the outside.

In some cases, for bricks having tongues of limited thickness and perforations with ample cross-section, and consequently with a tunnel of limited length, the vacuum created by the above mentioned evacuation unit 4 may already by sufficient to cause the hot drying air with an appropriate conveyance velocity, without its having to be propelled by the compressing fan of ventilation and cooling unit 3. In such cases, this last fan can be eliminated. Any number of variations can be made to the embodiment just described to the various requirements relative to the drying of blocks with diverse morphological characteristics and made with diverse materials.

This embodiment is therefore to be considered as purely exemplary and not limiting or binding with respect to the inventive concepts expressed in the attached claims.
In the case illustrated, for example, circulation fans 6 are of axial type, but radial fans equipped with suitable conveyors can also be used so as to obtain the same process with higher prevalent values.

The above inventive concepts also allow for the realizations of plants of greater complexity to increase the productive capacity by unit of time.

For example, considering figure 12, which represents a type of plant in which the tunnel is subdivided by two rows of trolleys 8 and diaphragms 9 into three parts.

Conduit 2 for the drying air, with respective perforations 2a, is embedded in floor 1d of the tunnel, and the circulation between the two sides 21, 31 of the tunnel that are separated by a row of trolleys 8 is obtained through a series of axial fans 11 with vertical axes equipped with conveyor ducts 11a.

(In this drawing, as also in the remaining drawings, areas with higher pressures are marked with + signs, while those with lower pressures are marked with - signs).

Of extreme interest, for the purpose of increased productivity of the plant but with significant dimensional compactness and a limited cost for amortizing it and the possibility of placing two tunnels 1, 1' parallel to one another over their entire length that are subdivided as described above, without any dividing wall to separate them, thus forming a multiple tunnel 101. As can be seen (figure 12) from the movement of the pressures and from the directions of circulation, the process is identical, but allows for even greater advantages.

From the description that has been given to this point, it can also be appreciated how the drying of the brick takes place under optimal physical conditions for the necessary heat exchange. Indeed the heated drying air, introduced in essentially uniform quantity by all the small distribution openings 2a, ends up mixing with the circulation air moved by fans 6 and passes through the blocks and, in moving from exit 1a toward entrance 1b of the tunnel by the effect of the conveyance imposed by evacuation unit 4, such a mixture exhibits a gradually decreasing temperature and a rising degree of relative humidity. This means that, on its first impact with blocks 10 as they come into the tunnel through entrance 1b, the air that effects the drying has the lowest temperature and the greatest relative humidity, and this eliminates the initial "shock" of dehydration with its risk of deforming the blocks which is observed in traditional plants.

Thus the difference between the temperature of the air and that of the blocks, in the course of the process according to the invention, tends to remain closer to a medium value, with good results for the purposes of the overall yield of the heat exchange.

The upper lateral surfaces of the blocks that make up the highest layer of the load, as well as the lateral surfaces of the blocks, which can be separated by gaps a few millimeters thick, are only affected marginally by the air in circulation, and this does not compromise the final result in any significant manner. Through the further use of light diaphragms or screens made with a material that tolerates a temperature of approximately 100°C it is still possible to further reduce or even to practically eliminate the heat exchange relative to these surfaces in cases where an unusually high quality of the product is required.

It is added that both the differing temperature and pressure values of the air and the direction of circulation of the air itself, as well as the conveyance velocity (continuous or in successive steps) of the mobile trolleys can be selected, regulated and/or programmed from time to time to obtain the type of process most suited to the different type of product sought.

## Claims

1. Process for the drying of perforated brick blocks (10) through the action of air at a pre-determined temperature that is blown into a drying tunnel (1) in which the blocks are placed on mobile trolleys (8), the drying being obtained by causing the air to flow only through perforations (10ⁱ) of blocks (10), without substantially affecting the outer lateral surfaces of the blocks themselves that are stacked on one another and laid sideways to one another, characterized in that
the following phases are included:
a) stacking on the mobile trolleys (8) a number of perforated blocks (10) placed on top of one another, laid sideways and lengthwise and aligned, with the longitudinal axes of the perforations (10ⁱ) arranged horizontally, with said axes of two perforations corresponding to two adjacent blocks laid next to one another arranged so that each is the extension of the other;
b) introduction of the trolleys (8) into the drying tunnel (1);
c) conveyance of said mobile trolleys (8) perpendicular to the direction of the above mentioned perforations (10ⁱ), along an essentially median axis of the drying tunnel (1) equipped with diaphragm (9), so as to divide with the trolleys and the diaphragm the tunnel (1) into two opposite sides (21, 31) separated by the stacked blocks and communicating with one another essentially only through all the perforations (10ⁱ) of the blocks themselves;
d) introduction of the heated drying air into one (21) of the two opposite sides of the tunnel (1) and a resulting pressure that differs to a pre-determined extent from the pressure prevailing in the other side (31), so that the entire flow of the above mentioned drying air passes through all the perforations (10ⁱ) of the blocks to circulate through both of the above mentioned sides (21, 31) of the tunnel (1);
e) cooling of blocks (10) once drying has taken place, with recovery of the relative heat from cooling;
f) extraction of the mobile trolleys (8) from the tunnel (1).

2. Drying plant suitable for realizing the process according to claim 1, wherein it includes:
a) a drying tunnel (1) equipped at its ends (1a, 1b) with an entrance opening and an exit opening that are sized so as to allow for the passage of mobile trolleys (8) carrying stacked blocks (10) without substantial leaks of pressured air;
b) a conduit (2) parallel to the tunnel (1), adjacent to it over its entire length and equipped with a number of perforations (2a) placed at equal distances which make it communicate with one (21) of the two sides (21, 31) of the tunnel (1) itself;
c) a main ventilation and heating unit (3) located near the exit (1a) of the tunnel (1), which delivers the drying air, at pre-determined pressures and temperatures, in said conduit (2);
d) a cooling unit (5) located near the exit (1a) of the tunnel (1), on the opposite side from the so-called main unit (3), comprising a compressing fan that delivers a stream of air on the stacked blocks (10) that have been dried, cooling them, then directing it toward the inside of the tunnel (1) so as to recover the heat from cooling;
e) an evacuation unit (4), comprised of a suction fan located near the entrance (1b) of the tunnel (1);
f) a number of circulating fans (6) placed at equal distances and mounted roughly on the center line of the ceiling (1c) of the tunnel (1) over the entire length of the tunnel itself that maintain a pre-determined difference in pressure between its two sides (21, 31);
g) a guide path (7) that can be embedded in the floor (1d) of the tunnel (1), arranged essentially along its middle line, having a shape suitable for holding and guiding during their conveyance mobile trolleys (8) that transport the blocks (10) to be dried;
h) a number of consecutive mobile trolleys (8) mounted on wheels, connected to one another, on which the blocks (10) to be dried are stacked;
i) a vertical diaphragm (9), essentially mounted in correspondence to the center line of ceiling (1c) of tunnel (1) and equipped with members (9a) suitable for creating sufficient pressure on the blocks stacked below (10) to create a seal that substantially prevents the passage of air from one side (21) of the tunnel to the other (31) through the diaphragm (9) itself.

3. Plant according to claim 2, wherein said mobile trolleys (8), as well as the respective diaphragms (9), are aligned to form two parallel rows, subdividing the tunnel (1) into three parts, with circulating fans (11) mounted on the center line of the ceiling (1c) and equipped with conveyors (11a, 11b) suitable for putting in communication the two sides (21, 31) of the tunnel (1) that are separated by a row of trolleys, and said conduit (2) for the drying air, with the respective outflow perforations (2a), made below the floor (1a) of the tunnel (1) in a position essentially facing the line formed by the above mentioned circulating fans (11).

4. Plant according to claim 3, wherein several tunnels (1) are placed parallel to one another, without any dividing wall to separate them from one another, thus forming a multiple tunnel (101) suitable for higher production speeds.

## Patentansprüche

1. Verfahren zum Trocknen von Hohlblock-Ziegelsteinen (10) durch die Wirkung von Luft mit einer vorbestimmten Temperatur, die in einen Trockentunnel (1) geblasen wird, in dem die Steine auf beweglichen Wagen (8) angeordnet sind, wobei das Trocknen dadurch erreicht wird, daß die Luft dazu gebracht wird, nur durch Hohlräume (10ⁱ) der Steine (10) zu strömen, ohne die äußeren seitlichen Oberflächen der aufeinander gestapelten und seitlich nebeneinandergelegten Steine selbst im wesentlichen zu beeinflussen, dadurch gekennzeichnet, daß es die folgenden Schritte umfaßt:
a) Stapeln einer Anzahl von Hohlblöcken (10) aufeinander, nebeneinander und hintereinander auf den beweglichen Wagen (8), wobei die Längsachsen der Hohlräume (10ⁱ) horizontal angeordnet und so ausgerichtet sind, daß die Achsen von zwei aneinander angrenzenden, nebeneinander gelegten Blöcken entsprechenden Hohlräumen so angeordnet sind, daß jeder in Verlängerung des anderen liegt;
b) Einführen der Wagen (8) in den Trockentunnel (1);
c) Bewegen der beweglichen Wagen (8) senkrecht zur Richtung der oben erwähnten Hohlräume (10ⁱ) entlang im wesentlichen einer Mittelachse des Trockentunnels (1), der mit einer Trennwand (9) ausgestattet ist, um so mit den Wagen und der Trennwand (9) den Tunnel (1) in zwei gegenüberliegende Seiten (21, 31) zu teilen, die durch die gestapelten Blöcke getrennt werden und miteinander im wesentlichen nur durch alle Hohlräume (10ⁱ) der Blöcke selbst verbunden sind;
d) Einführen der geheizten Trockenluft in eine (21) der beiden gegenüberliegenden Seiten des Tunnels (1) mit einem sich ergebenden Druck, der sich um ein vorbestimmtes Maß von dem auf der anderen Seite (31) herrschenden Druck unterscheidet, so daß der gesamte Strom der oben erwähnten Luft durch alle Hohlräume (10ⁱ) der Blöcke strömt, um durch beide der oben erwähnten Seiten (21, 31) des Tunnels (1) zu zirkulieren;
e) Kühlen der Blöcke (10) sobald das Trocknen stattgefunden hat, mit Rückgewinnung der relativen Wärme vom Kühlen;
f) Entfernen der beweglichen Wagen (8) aus dem Tunnel (1).

2. Trocknungsanlage, geeignet zum Durchführen des Verfahrens nach Anspruch 1, umfassend:
a) einen Trockentunnel (1), der an seinen Enden (1a, 1b) mit einer Eingangsöffnung und einer Ausgangsöffnung versehen ist, die so bemessen sind, daß bewegliche Wagen (8), die gestapelte Blöcke (10) tragen, ohne wesentliches Entweichen von unter Druck stehender Luft, hindurchtreten können;
b) eine zum Tunnel (1) parallele Leitung (2), die über seine gesamte Länge an ihn angrenzt und mit einer Anzahl von in gleichmäßigen Abständen angeordneten Löchern (2a) ausgestattet ist, über die sie mit einer (21) der beiden Seiten (21, 31) des Tunnels (1) selbst in Verbindung steht;
c) eine in der Nähe des Ausganges (1a) des Tunnels (1) angeordnete Haupt-Gebläse- und -Heizungseinheit (3), die die Trocknungsluft mit vorbestimmtem Druck und Temperatur an die Leitung (2) liefert;
d) eine in der Nähe des Ausganges (1a) des Tunnels (1) auf der der sogenannten Haupteinheit (3) gegenüberliegenden Seite angeordnete Kühleinheit (5), umfassend ein Verdichtergebläse, das einen Luftstrom auf die gestapelten Blöcke (10) abgibt, die getrocknet wurden, sie damit kühlt, und ihn dann auf das Innere des Tunnels (1) richtet, um die Wärme des Kühlvorgangs wiederzugewinnen;
e) eine Absaugeinheit (4), die aus einem Sauggebläse in der Nähe des Einganges (1b) des Tunnels (1) besteht;
f) eine Anzahl von in gleichmäßigen Abständen angeordneten und im wesentlichen auf der Mittellinie der Decke (1c) des Tunnels (1) angeordneten Umwälzgebläsen (6) über die gesamte Länge des Tunnels, die einen vorbestimmten Druckunterschied zwischen seinen beiden Seiten (21, 31) aufrechterhalten;
g) einen Leitpfad (7), der in dem Boden (1d) des Tunnels (1) eingelassen sein kann, im wesentlichen entlang seiner Mittellinie angeordnet ist und eine Form aufweist, die zum Halten und Führen der die zu trocknenden Blöcke (10) transportierenden beweglichen Wagen (8) während ihrer Bewegung geeignet ist;
h) eine Anzahl von aufeinander folgenden beweglichen, miteinander verbundenen, auf Rädern montierten Wagen (8), auf denen die zu trocknenden Blöcke (10) gestapelt werden;
i) eine vertikale, im wesentlichen übereinstimmend mit der Mittellinie der Decke (1c) des Tunnels (1) montierte Trennwand (9), die mit Bauteilen (9a) ausgestattet ist, die zum Erzeugen eines ausreichenden Druckes auf die unterhalb gestapelten Blöcke (10) geeignet sind, um eine Abdichtung zu schaffen, die im wesentlichen verhindert, daß Luft durch die Trennwand (9) selbst von einer Seite (21) des Tunnels zur anderen (31) gelangt.

3. Anlage nach Anspruch 2, dadurch gekennzeichnet, daß die beweglichen Wagen (8) ebenso wie die entsprechenden Trennwände (9) so ausgerichtet sind, daß sie zwei parallele Reihen bilden, die den Tunnel (1) in drei Teile unterteilen, wobei Umwälzgebläse (11) auf der Mittellinie der Decke (1c) montiert und mit Leiteinrichtungen (11a, 11b) versehen sind, die dazu geeignet sind, die beiden durch eine Reihe von Wagen getrennten Seiten (21, 31) des Tunnels (1) und die Leitung (2) für die Trockenluft miteinander zu verbinden, wobei die entsprechenden Ausströmoffnungen (2a) unterhalb des Bodens (1a) des Tunnels (1) in einer der durch die oben genannten Umwälzgebläse (11) gebildeten Linie im wesentlichen gegenüberliegenden Position angeordnet sind.

4. Anlage nach Anspruch 3, dadurch gekennzeichnet, daß mehrere Tunnel (1) ohne jede Trennwand, die sie voneinander trennt, parallel zueinander angeordnet sind und so einen Mehrfachtunnel (101) bilden, der für höhere Produktionsgeschwindigkeiten geeignet ist.

## Revendications

1. Procédé de séchage de blocs de brique (10) perforés par l'action d'air soufflé, à une température prédéterminée, dans un tunnel de séchage (1) dans lequel les blocs sont placés sur des chariots mobiles (8), le séchage étant obtenu en faisant en sorte que l'air s'écoule seulement à travers des perforations (10i) des blocs (10), sans affecter de façon substantielle les surfaces extérieures latérales des blocs eux-mêmes, qui sont empilés les uns sur les autres et sont disposés à côté les uns des autres, caractérisé en ce qu'il comprend les phases suivantes qui consistent :
a) à empiler sur les chariots mobiles (8) un certain nombre de blocs perforés (10) placés les uns sur les autres, disposés latéralement et longitudinalement et alignés, avec les axes longitudinaux des perforations (10i) disposés horizontalement, avec les dits axes de deux perforations correspondant à deux blocs adjacents proches l'un de l'autre arrangés de façon que l'un prolonge l'autre ;
b) à introduire les chariots (8) dans le tunnel de séchage (1);
c) à convoyer les dits chariots mobiles (8) perpendiculairement à la direction des perforations (10i) mentionnées ci-dessus, le long d'un axe pour l'essentiel médian du tunnel de séchage (1) équipé d'un diaphragme (9), de façon à diviser le tunnel (1), par les chariots et le diaphragme, en deux côtés opposés (21,31) séparés par les blocs empilés et communiquant l'un avec l'autre seulement pour l'essentiel à travers toutes les perforations (10i) des blocs eux-mêmes;
d) à introduire l'air de séchage chauffé dans l'un (21) des deux côtés opposés du tunnel (1) et une pression résultante qui diffère d'une valeur prédéterminée de la pression qui règne de l'autre côté (31), de façon que le flux total de l'air de séchage mentionné ci-dessus traverse toutes les perforations (10i) des blocs pour circuler à travers les deux côtés (21,31) mentionnés ci-dessus du tunnel (1);
e) à refroidir les blocs (10) une fois le séchage effectué, avec récupération de la chaleur relative provenant du refroidissement;
f) à extraire du tunnel (1) les chariots mobiles (8).

2. Installation de séchage pour la mise-en-oeuvre du procédé selon la revendication 1, comprenant :
a) un tunnel de séchage (1) équipé à ses extrémités (1a,1b) d'une ouverture d'entrée et d'une ouverture de sortie qui sont dimensionnées pour permettre le passage de chariots mobiles (8) portant des blocs empilés (10) sans pertes sensibles d'air sous pression ;
b) un conduit (2) parallèle au tunnel (1), adjacent à celui-ci sur toute sa longueur et équipé d'un certain nombre de perforations (2a) placées à des distances égales qui le font communiquer avec l'un (21) des deux côtés (21,31) du tunnel (1) lui-même:
c) un ensemble principal de ventilation et de chauffage(3) disposé près de la sortie (1a) du tunnel (1), qui fournit l'air de séchage, à des pressions et températures prédéterminées, dans le dit conduit (2);
d) un ensemble de refroidissement (5) disposé près de la sortie (1a) du tunnel (1), du côté opposé au dit ensemble principal (3), comprenant un ventilateur de compression qui fournit un courant d'air sur les blocs empilés (10) qui ont été sechés, en les refroidissant, puis en dirigeant celui-ci vers l'intérieur du tunnel (1) de façon à récupérer la chaleur provenant du refroidissement;
e) un ensemble d'évacuation( 4), comprenant un ventilateur d'aspiration disposé près de l'entrée (1b) du tunnel (1);
f) un certain nombre de ventilateurs de circulation (6) placés à égales distances et montés sensiblement sur l'axe central du plafond (1c) du tunnel (1) sur toute la longueur du tunnel lui-même, qui maintiennent une différence de pression prédéterminée entre ses deux côtés (21,31);
g) un chemin de guidage (7) pouvant être noyé dans le plancher (1d) du tunnel (1), disposé pour l'essentiel le long de son axe médian, ayant une forme appropriée pour maintenir et guider pendant leur convoyage des chariots mobiles (8) qui transportent les blocs (10) à sécher;
h) un certain nombre de chariots mobiles consécutifs (8) montés sur roues, reliés les uns aux autres, sur lesquels sont empilés les blocs (10) à sécher;
i) un diaphragme vertical (9), monté pour l'essentiel en correspondance avec l'axe central du plafond (1c) du tunnel (1) et équipé d'éléments (9a) appropriés pour créer une étanchéité qui empêche pour l'essentiel le passage d'air d'un côté (21) du tunnel vers l'autre côté (31) à travers le diaphragme (9) lui-même.

3. Installation selon la revendication 2, dans laquelle les dits chariots mobiles (8), de même que les diaphragmes respectifs (9), sont alignés pour former deux rangées parallèles, subdivisant le tunnel (1) en trois parties, avec des ventilateurs de circulation (11) montés sur l'axe central du plafond (1c) et équipés de transporteurs (11a,11b) conçus pour mettre en communication les deux côtés (21,31) du tunnel (1) qui sont séparés par une rangée de chariots, et le dit conduit (2) pour l'air de séchage, avec les perforations respectives d'écoulement de sortie (2a), étant ménagé sous le plancher (10) du tunnel (1) dans une position pour l'essentiel en regard de la ligne formée par les ventilateurs de circulation (11) mentionnés ci-dessus.

4. Installation selon la revendication 3, dans laquelle plusieurs tunnels sont disposés parallèlement les uns aux autres, en formant ainsi un tunnel multiple (101) convenant pour l'obtention de vitesses de production plus élevées.
